# EUROPÄISCHE PATENTSCHRIFT

(11) **EP 1 306 381 B1**
(45) Veröffentlichungstag und Bekanntmachung des Hinweises auf die Patenterteilung: **12.09.2012**
(21) Anmeldenummer: 02022052.1
(22) Anmeldetag: 02.10.2002
(51) Int. Cl.: C07F 7/08

(54) **Verfahren zur Hydrosilylierung ungesättigter aliphatischer Verbindungen**
Process for the hydrosilylation of aliphatic unsaturated compounds
Procédé d'hydrosilylation de composés aliphatiques insaturés

(30) Priorität: 10.10.2001 DE 10149967; 18.09.2002 DE 10243180
(43) Veröffentlichungstag der Anmeldung: 02.05.2003
(73) Patentinhaber: Evonik Degussa GmbH, 45128 Essen (DE)
(72) Erfinder: Giessler, Sabine, Dr., 79618 Rheinfelden (DE); Mack, Helmut, Dr., 79618 Rheinfelden (DE); Barfurth, Dieter, 79618 Rheinfelden (DE)

(56) Entgegenhaltungen:
- EP-A- 0 263 673
- EP-A- 0 596 646
- EP-A- 1 085 022
- EP-A1- 1 266 903
- WO-A-01/85738
- US-A- 4 292 434
- US-A- 4 417 069
- US-A- 4 649 208
- US-B1- 6 326 506
- PATENT ABSTRACTS OF JAPAN vol. 1999, no. 05, 31. Mai 1999 (1999-05-31) & JP 11 029584 A (SHIN ETSU CHEM CO LTD), 2. Februar 1999 (1999-02-02)

## Beschreibung

Die Erfindung betrifft ein Verfahren zur Herstellung von organofunktionellen Siliciumorganischen Verbindungen durch Umsetzen von Olefinen mit einer H-Si-Gruppen enthaltenden Verbindung in Gegenwart eines gelösten Platinkatalysators und mindestens einer weiteren Zusatzkomponente.

Organofunktionelle Silane sind von großem wirtschaftlichen Interesse und umfassen heute eine Vielzahl technischer Anwendungsgebiete.

Insbesondere 3-Chlorpropylchlorsilane sind wichtige Zwischenprodukte bei der Herstellung organofunktioneller Silane. Sie werden in der Regel durch Hydrosilylierung von Allylchlorid hergestellt. Aus 3-Chlorpropyl-trichlorsilan bzw. 3-Chlorpropyl-methyl-dichlorsilan kann man beispielsweise 3-Chlorpropyl-trialkoxysilane, 3-Chlorpropyl-methyl-dialkoxysilane, 3-Aminopropyl-trialkoxysilane, 3-Aminopropyl-methyl-dialkoxysilane, N-Aminoethyl-3-aminopropyl-trialkoxysilane, N-Aminoethyl-3-aminopropyl-methyl-dialkoxysilane, 3-Cyanopropyl-alkoxysilane, 3-Glycidyloxypropyl-alkoxysilane, 3-Methyacryloxypropyl-alkoxysilane, um nur einige Beispiele zu nennen, herstellen.

Die Anlagerung von Si-gebundenem Wasserstoff an aliphatische Mehrfachbindungen ist lange bekannt und wird als Hydrosilylierung bezeichnet. Gefördert wird diese Reaktion beispielsweise durch homogene und heterogene Platinkatalysatoren.

Solche Platinkatalysatoren können bei heterogenkatalytisch geführten Reaktionen Platinmetall, insbesondere feinstverteiltes Platin auf einem Träger wie Aktivkohle, oder bei homogener Katalyse beispielsweise Hexachloroplatinsäure, alkoholmodifizierte Hexachloroplatinsäure, Olefinkomplexe der Hexachloroplatinsäure, Vinylsiloxankomplexe der Hexachloroplatinsäure oder des Platins sein.

Vielfach werden einem Katalysatorsystem zur Erhöhung von Selektivität und Reaktivität Komplexierungsreagenzien beigegeben, wobei zugleich in einigen Fällen auch eine bessere Löslichkeit der Platinverbindung erhalten wird.

EP 0 573 282 A1 offenbart die Verwendung von H₂PtCl₆ in 2-Ethylhexanal sowie einen Zusatz von m-Xylolhexafluorid.

EP 0 263 673 A2 lehrt die Herstellung von 3-Chlorpropyltrichlorsilan durch Hydrosilylierung unter Einsatz von Hexachloroplatinsäure gelöst in Isopropanol (Speier-Katalysator) und dem Zusatz von N,N-Dimethylacetamid.

Bei der Hydrosilylierung von Allylchlorid und Methyldichlorsilan in Gegenwart des Speier-Katalysatorsystems bilden sich in der Regel zwei unerwünschte Nebenprodukte: Chlorpropylmethylchlorpropoxysilan und Dichlormethylpropoxsilan. Chlorpropylmethylchlorpropoxysilan kann nur sehr schlecht vom Zielprodukt Chlorpropylmethyldichlorsilan (CPMDCS) abgetrennt werden.

Die Aufzählung von Beispielen für Zusätze zu Metallkomplexkatalysatoren mit dem Ziel, die Durchführung homogenkatalytischer Reaktionen positiv zu beeinflussen könnte fast nach Belieben verlängert werden, vgl. u. a. US 4 417 069, US 4 649 208, EP 1 085 022 A, JP 11 029584 A, WO 01/85738.

Auch so genannte Karstedt-Katalysatoren (Pt(0)-Komplexe) werden seit 1973 für Hydrosilylierungen verwendet. So sind beispielsweise aus DE-OS 19 41 411 sowie US 3 775 452 Platinkatalysatoren vom KARSTEDT-Typ bekannt. Im Allgemeinen zeichnet sich dieser Katalysator-Typ durch hohe Stabilität - vor allem in oxidierend wirkender Matrix -, hohe Effektivität und geringe Isomerisationswirkung von C-Gerüsten aus.

Aus EP 0 838 467 A1 ist ein Verfahren zur Herstellung von Fluoralkylgruppentragenden Silanen unter Verwendung eines Pt(0)-Komplexkatalysators, der in Xylol gelöst ist, zu entnehmen.

Versuche zeigen, dass bei der Hydrosilylierung von beispielsweise Allylchlorid mit Methyldichlorsilan bei einem molaren Eduktverhältnis von 1 : 1 und dem Einsatz eines KARSTEDT-Katalysator, wie CPC072®, eine Ausbeute an 3-Chlorpropylmethyldichlorsilan von max. 49 Mol-% erhalten wird.

Der vorliegenden Erfindung lag die Aufgabe zugrunde, ein weiteres Verfahren zur Anlagerung einer Verbindung, die mindestens eine H-Si-Gruppe enthält, an eine ungesättigte aliphatische Verbindung in Gegenwart eines Platinkatalysators bereitzustellen. Ein besonderes Anliegen der vorliegenden Erfindung war es, ein verbessertes Verfahren zur Herstellung von 3-Chlorpropylchlorsilanen zu finden.

Die gestellte Aufgabe wird erfindungsgemäß entsprechend den Angaben der Patentansprüche gelöst.

Überraschenderweise wurde gefunden, dass Pt(0)-Komplexkatalysatoren, d. h. Karstedt-Katatysatoren wie CPC072^{®}, unter Zusatz mindestens eines organischen Amids ausgewählt aus Dimethyl formamid oder Dimethylacetamid oder Nitrils in geringerem Ausmaß als andere bisher bekannte Katalysatoren in Kombination mit speziellen Zusatzkomponenten weniger unerwünschte Nebenreaktionen bewirken. Beispielsweise kann dadurch die Bildung von Propen aus Allylchlorid, die durch die nachfolgende Reaktion des Propens, z. B. mit Methyldichlorsilan, unter Bildung des nicht erwünschten Propylmethyldichlorsilans die Ausbeute mindert, verringert werden. So kann gerade durch die überraschend vorteilhafte Wirkung der Kombination eines in einem Lösemittel gelösten Pt(0)-Komplexkatalysators und dem Zusatz eines Amids oder eines Nitrils, nachfolgend auch als Katalysatorsystem bezeichnet, in einfacher und wirtschaftlicher Weise ein weiteres Verfahren zur Anlagerung einer Verbindung, die mindestens eine H-Si-Gruppe enthält, an eine ungesättigte aliphatische Verbindung bereitgestellt werden. Zusätzlich kann die Bildung eines schlecht vom Wunschprodukt abdestillierbaren Nebenprodukts, wie Chlorpropylmethylchlorpropoxysilan, unterdrückt werden.

Gegenstand der vorliegenden Erfindung ist daher ein Verfahren zur Anlagerung einer Verbindung, die mindestens eine H-Si-Gruppe enthält, an eine ungesättigte aliphatische Verbindung der allgemeinen Formel I

X-(CH₂)ₙ-C(R¹)=CH₂ (I),

worin X für ein Wasserstoffatom, für Chlor, Brom oder Cyano bzw. Nitril (-CN), für Fluoralkyl gemäß CₘF₂ₘ₊₁ mit m = 1 bis 20, für Alkoxypolyether gemäß R¹O-(CH₂-CHR¹-O)_{y}- mit y = 0 bis 30 oder 2,3-Epoxypropyl-1 steht, Gruppen R¹ gleich oder verschieden sind und R¹ jeweils ein Wasserstoffatom oder eine lineare oder verzweigte C₁- bis C₄-Alkylgruppe darstellt und n eine ganze Zahl von 0 bis 3 ist,
indem man die ungesättigte aliphatische Verbindung mit einer H-Si-Gruppe enthaltenden Verbindung in Gegenwart eines Platinkatalysators und mindestens einer organischen Zusatzkomponente umsetzt,
wobei man die Umsetzung in Gegenwart
(i) eines Pt(0)-Komplexkatalysators, der in einem Lösemittel gelöst eingesetzt wird, und mindestens eines organischen Amids ausgewählt aus Dimethyl formamid oder Dimethylacetamid oder
(iii) eines Pt(0)-Komplexkatalysators, der in einem Lösemittel gelöst eingesetzt wird, und mindestens eines organischen Nitrils
durchführt.

Besonders bevorzugt setzt man als ungesättigte aliphatische Verbindung 3-Chlorpropen-1, das auch als Allylchlorid bezeichnet wird, oder 3-Chlor-2-methylpropen-1, auch Methallylchlorid genannt, ein.

Ferner setzt man beim erfindungsgemäßen Verfahren als H-Si-Gruppe enthaltende Verbindung bevorzugt ein Hydrogensilan der allgemeinen Formel II

H_{(4-a-b)} Si Rₐ Y_{b} (II),

wobei Gruppen R gleich oder verschieden sind und R eine lineare, verzweigte oder cyclische Alkyl-Gruppe mit 1 bis 16 C-Atomen oder eine Aryl-Gruppe darstellt, Gruppen Y gleich oder verschieden sind und Y für Chlor oder Brom oder Methoxy oder Ethoxy steht und a gleich 0 oder 1 oder 2 oder 3 und b gleich 0 oder 1 oder 2 oder 3 sind, mit der Maßgabe 1 ≤ (a + b) ≤ 3,
ein.

Insbesondere setzt man dabei als H-Si-Gruppe enthaltende Verbindung Trichlorsilan, Methyldichlorsilan oder Dimethylchlorsilan ein.

Für die erfindungsgemäße Umsetzung setzt man geeigneterweise die ungesättigte aliphatische Verbindung und die H-Si-Gruppe enthaltende Verbindung in einem molaren Verhältnis von 20 : 1 bis 1 : 5 ein, besonders vorzugsweise von 10 : 1 bis 1 : 3, ganz besonders vorzugsweise von 8 : 1 bis 1 : 2.

Ferner bevorzugt man beim erfindungsgemäßen Verfahren einen Pt(0)-Komplexkatalysator vom KARSTEDT-Typ; geeigneterweise solche, die 0,01 bis 20 Gew.-% Platin, vorzugsweise 0,1 bis 10 Gew.-% Platin, besonders vorzugsweise 0,5 bis 5 Gew.-% Platin, enthalten.

Insbesondere bevorzugt man beim erfindungsgemäßen Verfahren als KARSTEDT-Katalysator, d. h. einen Pt(0)-Komplex, den Platin(0)-divinyltetramethyldisiloxan-Komplex oder Platin(0)-Divinyltetramethyldisiloxan gemäß Formel Pt₂{[(CH₂=CH)(CH₃)₂Si]₂O}₃, der beispielsweise in Form einer 5%igen Lösung in Xylol als "CPC072^{®-} im Handel erhältlich ist.

Geeigneterweise setzt man den Pt(0)-Komplexkatalysator gelöst in einem weitgehend inerten, aromatischen Kohlenwasserstoff, vorzugsweise Xylol oder Toluol, in einem Keton, vorzugsweise Aceton, Methylethylketon oder Cyclohexanon, oder in einem Alkohol, vorzugsweise Methanol, Ethanol, n- oder i-Propanol, ein. Dabei beträgt der Gehalt an Pt(0) in der Lösung insbesondere 0,1 bis 10 Gew.-%, vorzugsweise 0,5 bis 5 Gew.-%, besonders vorzugsweise 1 bis 3 Gew.-%, ganz besonders bevorzugt sind 2 Gew.-%.

Ferner setzt man beim erfindungsgemäßen Verfahren das Pt(0)-Komplex-katalysatorsystem, d. h. Pt(0), zur ungesättigten aliphatischen Verbindung in einem molaren Verhältnis von 1 : 1 000 bis 1 : 70 000, besonders bevorzugt von 1 : 10 000 bis 1 : 60 000, ganz besonders bevorzugt von 1 : 15 000 bis 1 : 40 000, ein.

Für die Durchführung des erfindungsgemäßen Verfahrens setzt man beispielsweise das organische Amid zunächst der Pt(0)-Komplexkatalysatorlösung zu und gibt nachfolgend die so erhaltene Amid-haltige Katalysatorlösung dem Gemisch aus mindestens einer H-Si-Gruppe enthaltende Verbindung und mindestens einer ungesättigten aliphatischen Verbindung zu. Man kann aber auch eine der beiden Eduktkomponenten oder ein Gemisch daraus vorlegen, den in einem Lösemittel gelösten Pt(0)-Katalysator zugeben und anschließend, geeigneterweise unter guter Durchmischung, das Amid zusetzen. Ferner kann man eine der beiden Eduktkomponenten oder ein Gemisch daraus vorlegen, das Amid zugeben und anschließend die Pt(0)-Katalysatorlösung in das Reaktionsgemisch einbringen. Ebenfalls ist es möglich, eine der Eduktkomponenten, vorzugsweise die H-Sienthaltende Verbindung, zu dosieren.

Ferner kann man erfindungsgemäß für die vorliegende Umsetzung als Zusatzkomponente in Verbindung mit einer Pt(0)-Komplexkatalysatorlösung mindestens ein organisches Nitrils der allgemeinen Formel V

R⁸-CN (V),

wobei R⁸ für eine lineare, verzweigte oder cyclische Alkyl-Gruppe mit 1 bis 16 C-Atomen steht,
vorteilhaft einsetzen.

So bevorzugt man als organisches Nitril Buttersäurenitril.

Die Zusatzkomponente gemäß der Formeln (III), (IV) oder (V) und den Pt(0)-Komplexkatalysator setzt man bevorzugt in einem molaren Verhältnis von 10 : 1 bis 1 : 10 ein, besonders bevorzugt ist ein molares Verhältnis von 1 : 1.

Weiterhin steht das Platin des eingesetzten Katalysators bezogen auf die H-Si-Gruppe gemäß Formel II vorzugsweise in einem molaren Verhältnis von 1 : 10¹⁰ bis 1 : 10², besonders vorzugsweise von 1 : 10⁸ bis 1 : 10³.

Beim erfindungsgemäßen Verfahren führt man die Umsetzung üblicherweise bei einer Temperatur im Bereich von 10 bis 200 °C durch. Bevorzugt führt man die erfindungsgemäße Umsetzung bei einer Temperatur im Bereich von 20 bis 200 °C, besonders vorzugsweise bei 30 bis 150 °C durch. Ferner führt man die erfindungsgemäße Umsetzung geeigneterweise bei einem Druck im Bereich von 1 bis 50 bar absolut durch, vorzugsweise bei 1 bis 10 bar abs., insbesondere bei dem Druck der umgebenden Atmosphäre.

Nach dem erfindungsgemäßen Verfahren kann man beispielsweise funktionelle Organosilane, insbesondere 3-Chlorpropyltrichlorsilan, 3-Chlorpropyltrialkoxysilane, 3-Chlorpropylmethyldichlorsilan sowie 3-Chlorpropylmethyldialkoxysilane herstellen, wobei Alkoxy bevorzugt für Methoxy oder Ethoxy steht.

So setzt man nach dem erfindungsgemäßen Verfahren vorzugsweise 3-Chlorpropen-1 mit einem Hydrogenchlorsilan der allgemeinen Formel II, insbesondere mit Trichlorsilan oder Methyldichlorsilan, in Gegenwart eines Platin(0)-Komplexkatalysators und unter Zusatz mindestens eines organischen Amids, ausgewählt aus Dimethylformamid oder Dimethyl- acetamids Nitrils acetamid oder Amins, um, wobei der Katalysator und das Amid oder das Nitril gemeinsam in einem Lösemittel vorliegend eingesetzt werden, das Hydrosilylierungsprodukt aus dem Reaktionsgemisch gewinnt und dieses mit einem Alkohol in an sich bekannter Weise verestert, wobei ein 3-Chlorpropylalkoxysilan erhalten wird. Als Alkohol für die Veresterung des Hydrosilylierungsprodukts setzt man vorzugsweise Methanol, Ethanol oder 2-Methoxyethanol ein.

Im Allgemeinen kann man das erfindungsgemäße Verfahren wie folgt ausführen:
Beispielsweise kann die olefinisch ungesättigte Komponente, z. B. Allylchlorid, in einem Reaktionsgefäß vorgelegt werden. Anschließend wird die H-SilanKomponente, z. B. Methyldichlorsilan, zu der olefinisch ungesättigten Komponente zugeben und der Reaktionsgefäßinhalt gut durchmischt. Es folgt die Zugabe des Platin(0)-Komplexkatalysatorssystems, das geeigneterweise separat durch Vermischen des Platinkomplexes, z. B. CPC072, mit der Zusatzkomponente, z. B. Dimethylformamid, hergestellt wurde.

Die mit Katalysator versetzte Reaktionsmischung kann dann langsam erwärmt werden, bis der Siedepunkt des Gemisches erreicht ist und Rückfluss einsetzt. Die Siedetemperatur wird durch die Art der Reaktionskomponenten (Edukte) bestimmt.

Die einsetzende Hydrosilylierungsreaktion macht sich in der Regel durch eine Erhöhung der Sumpftemperatur im Reaktionsgefäß bemerkbar, weil durch die Addition Reaktionsprodukte entstehen, die wesentlich höhere Siedepunkte als die Ausgangsmaterialien besitzen. Die Umsetzung der Edukte wird im Allgemeinen durch regelmäßige Probennahme und GC-Bestimmung der Inhaltsstoffe verfolgt. Sobald keine nennenswerte Erhöhung des Gehalts des gewünschten Reaktionsprodukts im Reaktionsgemisch feststellbar ist, kann begonnen werden, die niedrig siedenden Bestandteile des Reaktionsgemischs destillativ abzutrennen, gegebenenfalls unter vermindertem Druck. Anschließend kann eine Feindestillation des Produkts durchgeführt werden, häufig wird auch hierbei unter vermindertem Druck gearbeitet.

Durch die hervorragende Wirksamkeit des erfindungsgemäß eingesetzten Katalysatorsystems findet in der Regel die Addition des H-Silans an die olefinisch ungesättigte Komponente so schnell statt, dass Nebenreaktionen weitgehend unterdrückt werden und die Ausbeute und Reinheit an gewünschtem Produkt deutlich höher als bei Verwendung eines dem Stand der Technik entsprechenden Katalysators ist.

So kann man nach dem erfindungsgemäßen Verfahren in vorteilhafter Weise, da einfach und wirtschaftlich, beispielsweise 3-Chlorpropyltrichlorsilan mit einer hervorragenden Ausbeute herstellen.

Die vorliegende Erfindung wird durch die nachfolgenden Beispiele näher erläutert:

### Beispiele

### Vergleichsbeispiel A

In einem 500-ml-Vierhalsglaskolben, versehen mit Wasserkühler, Tiefkühler, Rührer, Thermometer und Tropftrichter, werden unter Stickstoffatmosphäre 76,5 g (1,0 Mol) Allylchlorid und 115,0 g (1,0 Mol) Methyldichlorsilan vermischt. In diese Mischung werden bei Raumtemperatur 0,32 g CPC072® (Pt(0)-Divinyltetramethyldisiloxan in Xylol, 2 % Pt; Katalysatorzusatz im Molverhältnis Pt zu Methyldichlorsilan = 1 : 30 000) gegeben. Anschließend wird die Reaktionsmischung auf ca. 42 bis 43 °C erwärmt. Das Gemisch beginnt dann zu sieden. Durch die einsetzende Additionsreaktion erhöht sich der Gehalt an höhersiedendem Reaktionsprodukt und die Temperatur des Reaktionsgemisches erreicht etwa 93 °C. Während der Reaktion werden Proben gezogen und gaschromatographisch untersucht. Nach etwa 4 Stunden Reaktionszeit ist die Umsetzung beendet: der Gehalt an Reaktionsprodukt (Chlorpropylmethyldichlorsilan) ist konstant. Das Reaktionsgemisch wird destillativ über eine Destillationsbrücke aufgearbeitet. Nach Abtrennen der Leichtsieder (nicht umgesetzte Edukte) bei 55 bis 65 °C und Normaldruck wird das gewünschte Produkt, Chlorpropylmethyldichlorsilan, bei ca. 85 °C Kopftemperatur und 20 mbar aus dem Reaktionsgemisch entfernt. Es werden 93,3 g (entspricht einer Ausbeute von 49 % der Theorie) mit einer Reinheit von 98 GC-Flächen-% erhalten. Die Selektivität beträgt 50 %.

### Vergleichsbeispiel B

In einem 500-ml-Dreihalsglaskolben, versehen mit Wasserkühler, Tiefkühler, Rührer, Thermometer und Tropftrichter, werden unter Stickstoffatmosphäre 153,1 g (2,0 Mol) Allylchlorid und 115,0 g (1,0 Mol) Methyldichlorsilan vermischt. In diese Mischung werden bei Raumtemperatur 0,32 g CPC072^{®} (Pt(0)-Divinyltetramethyldisiloxan in Xylol, 2 % Pt; Katalysatorzusatz im Molverhältnis Pt zu Methyldichlorsilan = 1 : 30 000) gegeben. Anschließend wird die Reaktionsmischung auf ca. 42 bis 43 °C erwärmt. Das Gemisch beginnt dann zu sieden. Durch die einsetzende Additionsreaktion erhöht sich der Gehalt an höhersiedendem Reaktionsprodukt und die Temperatur des Reaktionsgemisches erreicht etwa 52 °C. Während der Reaktion werden Proben gezogen und gaschromatographisch untersucht. Nach etwa 4,5 Stunden Reaktionszeit ist die Umsetzung beendet: der Gehalt an Reaktionsprodukt (Chlorpropylmethyldichlorsilan) ist konstant. Das Reaktionsgemisch wird destillativ über eine Destillationsbrücke aufgearbeitet. Nach Abtrennen der Leichtsieder (nicht umgesetzte Edukte) bei 55 bis 60 °C und Normaldruck wird das gewünschte Produkt, Chlorpropylmethyldichlorsilan, bei 71 bis 73 °C und 23 mbar aus dem Reaktionsgemisch entfernt. Es werden 92,1 g (entspricht einer Ausbeute von 48,1 % der Theorie) mit einer Reinheit von 97,6 GC-Flächen-% erhalten.

### Vergleichsbeispiel C

In einem 500-ml-Vierhalsglaskolben, versehen mit Wasserkühler, Tiefkühler, Rührer, Thermometer und Tropftrichter, werden unter Stickstoffatmosphäre 76,5 g (1,0 Mol) Allylchlorid und 115,0 g (1,0 Mol) Methyldichlorsilan vermischt. In diese Mischung werden bei Raumtemperatur 0,87 g Hexachlorplatinsäure, gelöst in Isopropanol, im Molverhältnis Pt zu Methyldichlorsilan = 1 : 30 000) gegeben. Anschließend wird die Reaktionsmischung auf ca. 42 bis 43 °C erwärmt. Das Gemisch beginnt dann zu sieden. Durch die einsetzende Additionsreaktion erhöht sich der Gehalt an höhersiedendem Reaktionsprodukt und die Temperatur des Reaktionsgemisches erreicht etwa 95 °C. Während der Reaktion werden Proben gezogen und gaschromatographisch untersucht. Nach etwa 4 Stunden Reaktionszeit ist die Umsetzung beendet: der Gehalt an Reaktionsprodukt (Chlorpropylmethyldichlorsilan) ist konstant. Das Reaktionsgemisch wird destillativ über eine Destillationsbrücke aufgearbeitet. Nach Abtrennen der Leichtsieder (nicht umgesetzte Edukte) bei 55 bis 65 °C und Normaldruck wird das gewünschte Produkt, Chlorpropylmethyldichlorsilan, bei ca. 85 °C und 19 mbar aus dem Reaktionsgemisch entfernt. Es werden 91,3 g (entspricht einer Ausbeute von 48 % der Theorie) mit einer Reinheit von 91,2 GC-Flächen-% erhalten. Die Selektivität beträgt 49 %. Bei der Hydrosilylierung von Allylchlorid unter Verwendung des Speier-Katalysatorsystems bilden sich zwei unerwünschte Nebenprodukte (Chlorpropylmethylchlorpropoxysilan und Dichlormethylpropoxysilan). Ersteres ist nur schwer vom Wunschprodukt zu trennen. In der Produktfraktion tritt es mit 1,16 GC-Flächen-% auf.

### Beispiel 1

In einem 500-ml-Dreihalsglaskolben, versehen mit Wasserkühler, Rührer, Thermometer und Tropftrichter, werden unter Stickstoffatmosphäre 114,8 g (1,5 Mol) Allylchlorid und 172,5 g (1,5 Mol) Methyldichlorsilan vermischt. In diese Mischung werden bei Raumtemperatur 0,48 g CPC072^{®} (Pt(0)-Divinyltetramethyldisiloxan in Xylol, 2 % Pt, modifiziert mit 1 Mol N,N-Dimethylacetamid pro Mol Pt; Katalysatorzusatz im Molverhältnis Pt zu Methyldichlorsilan = 1 : 30 000) gegeben. Anschließend wird die Reaktionsmischung auf ca. 44 bis 46 °C erwärmt. Das Gemisch beginnt dann zu sieden. Durch die einsetzende Additionsreaktion erhöht sich der Gehalt an höhersiedendem Reaktionsprodukt und die Temperatur des Reaktionsgemisches erreicht nach 2 Stunden etwa 107 °C. Während der Reaktion werden Proben gezogen und gaschromatographisch untersucht. Nach etwa 4 Stunden Reaktionszeit ist die Umsetzung beendet: der Gehalt an Reaktionsprodukt (Chlorpropylmethyldichlorsilan) ist konstant. Das Reaktionsgemisch wird destillativ über eine Destillationsbrücke aufgearbeitet. Nach Abtrennen der Leichtsieder (nicht umgesetzte Edukte) bei 50 bis 55 °C und Normaldruck wird das gewünschte Produkt, Chlorpropylmethyldichlorsilan, bei 68 bis 70 °C und 20 mbar aus dem Reaktionsgemisch entfernt. Es werden 233,6 g (entspricht einer Ausbeute von 81,1 % der Theorie) mit einer Reinheit von 97,9 GC-Flächen-% erhalten.

### Beispiel 2

In einem 500-ml-Dreihalsglaskolben, versehen mit Wasserkühler, Rührer, Thermometer und Tropftrichter, werden unter Stickstoffatmosphäre 153,1 g (2,0 Mol) Allylchlorid und 115,0 g (1,0 Mol) Methyldichlorsilan vermischt. In diese Mischung werden bei Raumtemperatur 0,32 g CPC072® (Pt(0)-Divinyltetramethyldisiloxan in Xylol, 2 % Pt, modifiziert mit 1 Mol N,N-Dimethylacetamid pro Mol Pt; Katalysatorzusatz im Molverhältnis Pt zu Methyldichlorsilan = 1 : 30 000) gegeben. Anschließend wird die Reaktionsmischung auf ca. 44 bis 46 °C erwärmt. Das Gemisch beginnt dann zu sieden. Die Additionsreaktion beginnt und die Temperatur des Reaktionsgemisches erreicht nach 6 Stunden etwa 49 °C. Während der Reaktion werden Proben gezogen und gaschromatographisch untersucht. Nach etwa 7 Stunden Reaktionszeit ist die Umsetzung beendet: der Gehalt an Reaktionsprodukt (Chlorpropylmethyldichlorsilan) ist konstant. Das Reaktionsgemisch wird destillativ über eine Destillationsbrücke aufgearbeitet. Nach Abtrennen der Leichtsieder (nicht umgesetzte Edukte) bei 55 bis 60 °C und Normaldruck wird das gewünschte Produkt, Chlorpropylmethyldichlorsilan, bei 71 bis 74 °C und 22 mbar aus dem Reaktionsgemisch entfernt. Es werden 159,6 g (entspricht einer Ausbeute von 83,3 % der Theorie) mit einer Reinheit von 98,7 GC-Flächen-% erhalten.

### Beispiel 3

In einem 500-ml-Dreihalsglaskolben, versehen mit Wasserkühler, Rührer, Thermometer und Tropftrichter, werden unter Stickstoffatmosphäre 114,8 g (1,5 Mol) Allylchlorid und 172,5 g (1,5 Mol) Methyldichlorsilan vermischt. In diese Mischung werden bei Raumtemperatur 0,48 g CPC072® (Pt(0)-Divinyltetramethyldisiloxan in Xylol, 2 % Pt, modifiziert mit 1 Mol N,N-Dimethylformamid pro Mol Pt; Katalysatorzusatz im Molverhältnis Pt zu Methyldichlorsilan = 1 : 30 000) gegeben. Anschließend wird die Reaktionsmischung auf ca. 44 bis 46 °C erwärmt. Das Gemisch beginnt dann zu sieden. Durch die einsetzende Additionsreaktion erhöht sich der Gehalt an höhersiedendem Reaktionsprodukt und die Temperatur des Reaktionsgemisches erreicht nach 90 Minuten etwa 91 °C. Während der Reaktion werden Proben gezogen und gaschromatographisch untersucht. Nach etwa 3,5 Stunden Reaktionszeit ist die Umsetzung beendet: der Gehalt an Reaktionsprodukt (Chlorpropylmethyldichlorsilan) ist konstant. Das Reaktionsgemisch wird destillativ über eine Destillationsbrücke aufgearbeitet. Nach Abtrennen der Leichtsieder (nicht umgesetzte Edukte) bei 50 bis 60 °C und Normaldruck wird das gewünschte Produkt, Chlorpropylmethyldichlorsilan, bei 75 bis 77 °C und 25 mbar aus dem Reaktionsgemisch entfernt. Es werden 220,1 g (entspricht einer Ausbeute von 76,6 % der Theorie) mit einer Reinheit von 98,1 GC-Flächen-% erhalten.

### Beispiel 4

In einem 500-ml-Vierhalsglaskolben, versehen mit Wasserkühler, Tiefkühler, Rührer, Thermometer und Tropftrichter, werden unter Stickstoffatmosphäre 76,5 g (1,0 Mol) Allylchlorid und 115,0 g (1,0 Mol) Methyldichlorsilan vermischt. In diese Mischung werden bei Raumtemperatur 0,32 g CPC072® (Pt(0)-Divinyltetramethyldisiloxan in Xylol, 2 % Pt, modifiziert mit 1 Mol Buttersäurenitril pro Mol Pt; Katalysatorzusatz im Molverhältnis Pt zu Methyldichlorsilan = 1 : 30 000) gegeben. Anschließend wird die Reaktionsmischung auf ca. 42 bis 45 °C erwärmt. Das Gemisch beginnt dann zu sieden. Die Additionsreaktion beginnt, und die Temperatur des Reaktionsgemisches erreicht nach 4 Stunden etwa 75 °C. Während der Reaktion werden Proben gezogen und gaschromatographisch untersucht. Nach etwa 4,5 Stunden Reaktionszeit ist die Umsetzung beendet: der Gehalt an Reaktionsprodukt (Chlorpropylmethyldichlorsilan) ist konstant. Das Reaktionsgemisch wird destillativ über eine Destillationsbrücke aufgearbeitet. Nach Abtrennen der Leichtsieder (nicht umgesetzte Edukte) bei 55 bis 62 °C und Normaldruck wird das gewünschte Produkt, Chlorpropylmethyldichlorsilan, bei ca. 74 °C und 35 mbar aus dem Reaktionsgemisch mit einer GC-Reinheit von 96,38 % entfernt. Es werden 118,4 g (entspricht einer Ausbeute von 62 % der Theorie) erhalten.

### Abkürzungen:

- CPMDCS: 3-Chlorpropylmethyldichlorsilan
- MTCS: Methyltrichlorsilan
- MHDCS: Methyldichlorsilan
- AC: Allylchlorid
- BN: Buttersäurenitril
- BA: Butylamin
- DMA: N,N-Dimethylacetamid
- DMF: N,N-Dimethylformamid

**Tabelle der Versuchsergebnisse**

| Beispiele | Moleverhaltnis MHDCS zu AC | Katalysator/ Zusatz | Umsatz CPMDCS (Mol-%) | Reinheit CPMDCS | Molverhaltnis CPMDCS zu MTCS* |
|---|---|---|---|---|---|
| A (Vergleich) | 1:1 | CPC072/- | 49,0 | 98,0 GC-% | 1 : 0,75 |
| B (Vergleich) | 1:2 | CPC072/- | 48,1 | 97,6 GC-% | 1 : 0,99 |
| C (Vergleich) | 1:1 | Speier/- | 48,0 | 91,2 GC-% | 1 : 0,69 |
| 1 | 1:1 | CPC072/DMA | 81,1 | 97,9 GC-% | 1 : 0,16 |
| 2 | 1:2 | CPC072/DMA | 83,3 | 98,7 GC-% | 1 : 0,23 |
| 3 | 1:1 | CPC072/DMF | 76,6 | 98,1 GC-% | 1 : 0,26 |
| 4 | 1:1 | CPC072/BN | 62,0 | 96,4 GC-% | 1 : 0,37 |

| | | | | | |
|---|---|---|---|---|---|
| * im Gemisch nach Ende der Reaktion | | | | | |

Die Daten der Tabelle belegen, dass durch die erfindungsgemäße Lehre die Ausbeute an Hydrosilylierungsprodukt drastisch verbessert werden kann. Insbesondere wird bei der erfindungsgemäßen Herstellung von 3-Chlorpropyltrichlorsilan aus Trichlorsilan oder der erfindungsgemäßen Herstellung von 3-Chlorpropylmethyldichlorsilan aus Methyldichlorsilan auch die Bildung des Methyltrichlorsilan aus einer konkurrierenden Reaktion stark gehemmt.

## Patentansprüche

1. Verfahren zur Anlagerung einer Verbindung, die mindestens eine H-Si-Gruppe enthält, an eine ungesättigte aliphatische Verbindung der allgemeinen Formel
X-(CH₂)ₙ-C(R¹)=CH₂ (I),
worin X für ein Wasserstoffatom, für Chlor, Brom oder Cyano bzw. Nitril (-CN), für Fluoralkyl gemäß CₘF₂ₘ₊₁ mit m = 1 bis 20, für Alkoxypolyether gemäß R¹O-(CH₂-CHR¹-O)_{y}- mit y = 0 bis 30 oder für 2,3-Epoxypropyl-1 steht, Gruppen R¹ gleich oder verschieden sind und R¹ jeweils ein Wasserstoffatom oder eine lineare oder verzweigte C₁- bis C₄-Alkylgruppe darstellt und n eine ganze Zahl von 0 bis 3 ist,
indem man die ungesättigte aliphatische Verbindung mit einer H-Si-Gruppe enthaltenden Verbindung in Gegenwart eines Platinkatalysators und mindestens einer organischen Zusatzkomponente umsetzt,
wobei man die Umsetzung in Gegenwart
(i) eines Pt(0)-Komplexkatalysators, der in einem Lösemittel gelöst eingesetzt wird, und mindestens eines organischen Amid, ausgewählt aus Dimethylformamid oder Dimethylacetamid,
oder
(iii) eines Pt(0)-Komplexkatalysators, der in einem Lösemittel gelöst eingesetzt wird, und mindestens eines organischen Nitrils
durchführt

2. Verfahren nach Anspruch 1,
**dadurch gekennzeichnet,**
**dass** man als ungesättigte aliphatische Verbindung 3-Chlorpropen-1 oder 3-Chlor-2-methylpropen-1 einsetzt.

3. Verfahren nach Anspruch 1 oder 2,
**dadurch gekennzeichnet,**
**dass** man für die Umsetzung als H-Si-Gruppe enthaltende Verbindung ein Hydrogensilan der allgemeinen Formel II
H_{(4-a-b)} Si Rₐ Y_{b} (II),
wobei Gruppen R gleich oder verschieden sind und R eine lineare, verzweigte oder cyclische Alkyl-Gruppe mit 1 bis 16 C-Atomen oder eine Aryl-Gruppe darstellt,
Gruppen Y gleich oder verschieden sind und Y für Chlor oder Brom oder Methoxy oder Ethoxy steht und
a gleich 0 oder 1 oder 2 oder 3 und b gleich 0 oder 1 oder 2 oder 3 sind, mit der Maßgabe 1 ≤ (a + b) ≤ 3,
einsetzt.

4. Verfahren nach mindestens einem der Ansprüche 1 bis 3,
**dadurch gekennzeichnet,**
**dass** man als H-Si-Gruppe enthaltende Verbindung Trichlorsilan, Methyldichlorsilan oder Dimethylchlorsilan einsetzt.

5. Verfahren nach mindestens einem der Ansprüche 1 bis 4,
**dadurch gekennzeichnet,**
**dass** man für die Umsetzung die ungesättigte aliphatische Verbindung und die H-Si-Gruppe enthaltende Verbindung in einem molaren Verhältnis von 20 : 1 bis 1 : 5 einsetzt.

6. Verfahren nach mindestens einem der Ansprüche 1 bis 5,
**dadurch gekennzeichnet,**
**dass** man als Pt(0)-Komplexkatalysator einen Platin(0)-divinyltetramethyldisiloxan-Komplex oder Platin(0)-Divinyltetramethyldisiloxan gemäß Formel Pt₂{[(CH₂=CH)(CH₃)₂Si]₂O}₃ einsetzt.

7. Verfahren nach mindestens einem der Ansprüche 1 bis 6,
**dadurch gekennzeichnet,**
**dass** man den Pt(0)-Komplexkatalysator gelöst in einem aromatischen Kohlenwasserstoff, in einem Keton oder in einem Alkohol einsetzt, wobei der Pt(0)-Gehalt der Lösung 0,1 bis 10 Gew.-% beträgt.

8. Verfahren nach mindestens einem der Ansprüche 1 bis 7,
**dadurch gekennzeichnet,**
**dass** man für die Umsetzung mindestens ein organisches Nitrils der allgemeinen Formel V
R⁸-CN (V),
wobei R⁶ für eine lineare, verzweigte oder cyclische Alkyl-Gruppe mit 1 bis 16 C-Atomen steht,
einsetzt.

9. Verfahren nach mindestens einem der Ansprüche 1 bis 8,
**dadurch gekennzeichnet,**
**dass** man als organisches Nitril Buttersäurenitril einsetzt.

10. Verfahren nach mindestens einem der Ansprüche 1 bis 9,
**dadurch gekennzeichnet,**
**dass** man die jeweilige organische Zusatzkomponente ausgewählt aus Dimetylformamid oder Dimethylacetamid oder gemäß der Formel (V) und das Platin des Pt(0)-Komplexkatalysators in einem molaren Verhältnis von 10 : 1 bis 1 : 10 einsetzt.

11. Verfahren nach mindestens einem der Ansprüche 1 bis 10,
**dadurch gekennzeichnet,**
**dass** man die jeweilige organische Zusatzkomponente ausgewählt aus dimetylformamid oder dimethylacetamid oder gemäß der Formel (V) der Platinkatalysatorlösung zusetzt und nachfolgend diese dem Gemisch aus mindestens einer H-Si-Gruppe enthaltenden Verbindung und mindestens einer ungesättigten aliphatischen Verbindung zugibt.

12. Verfahren nach mindestens einem der Ansprüche 1 bis 11,
**dadurch gekennzeichnet,**
**dass** das Platin des eingesetzten Katalysators, bezogen auf die H-Si-Gruppe, gemäß Formel II in einem molaren Verhältnis von 1 : 10¹⁰ bis 1 : 10² steht

13. Verfahren nach mindestens einem der Ansprüche 1 bis 12,
**dadurch gekennzeichnet,**
**dass** man die Umsetzung bei einer Temperatur im Bereich von 10 bis 200 °C durchführt

14. Verfahren nach mindestens einem der Ansprüche 1 bis 13,
**dadurch gekennzeichnet,**
**dass** man die Umsetzung bei einem Druck im Bereich von 1 bis 50 bar absolut durchführt.

15. Verfahren nach mindestens einem der Ansprüche 1 bis 14,
**dadurch gekennzeichnet,**
**dass** man 3-Chlorpropen-1 mit einem Chlorsilan der allgemeinen Formel II in Gegenwart eines Pt(0)-Komplexkatalysators und unter Zusatz mindestens einer der Zusatzkomponente ausgewählt aus Dimethylformamid oder Dimethylacetamid gemäß der (V) umsetzt, wobei der Katalysator und die Zusatzkomponente gemeinsam in einem Lösemittel vorliegend eingesetzt werden, man das Hydrosilylierungsprodukt aus dem Reaktionsgemisch gewinnt und dieses mit einem Alkohol verestert

16. Verfahren nach Anspruch 15,
**dadurch gekennzeichnet,**
**dass** man als Alkohol Methanol, Ethanol oder 2-Methoxyethanol einsetzt

## Claims

1. Process for the addition of a compound containing at least one H-Si group onto an unsaturated aliphatic compound
of the general formula I
X- (CH₂)ₙ-C(R¹) =CH₂ (I),
where X is a hydrogen atom, chlorine, bromine or cyano or nitrile (-CN), fluoroalkyl of the formula CₘF₂ₘ₊₁, where m = 1 to 20, alkoxy polyether of the formula R¹O-(CH₂-CHR¹-O)_{y}-, where y = 0 to 30 or 2,3-epoxy-1-propyl, where the groups R¹ are identical or different and R¹ is a hydrogen atom or a linear or branched C₁-C₄-alkyl group and n is an integer from 0 to 3, by reaction of the unsaturated aliphatic compound with a compound containing an H-Si group in the presence of a platinum catalyst and at least one organic additive component, wherein the reaction is carried out in the presence of
(i) a Pt(0) complex catalyst, which is used as a solution in a solvent, and at least one organic amide selected from among dimerthylformamide and dimethylacetamide
or
(iii) a Pt(0) complex catalyst, which is used as a solution in a solvent, and at least one organic nitrile.

2. Process according to Claim 1, **characterized in that** the unsaturated aliphatic compound used is 3-chloro-1-propene or 3-chloro-2-methyl-1-propene.

3. Process according to Claim 1 or 2, **characterized in that** the compound containing an H-Si group which is used in the reaction is a hydrogensilane of the general formula II
H_{(4-a-b)}SiRₐY_{b} (II),
where the groups R are identical or different and R is a linear, branched or cyclic alkyl group having from 1 to 16 carbon atoms or an aryl group, the groups Y are identical or different and Y is chlorine or bromine or methoxy or ethoxy and a is 0 or 1 or 2 or 3 and b is 0 or 1 or 2 or 3, with the proviso that 1 ≤ (a + b) ≤ 3.

4. Process according to any of Claims 1 to 3, **characterized in that** the compound containing an H-Si group which is used is trichlorosilane, methyldichlorosilane or dimethylchlorosilane.

5. Process according to any of Claims 1 to 4, **characterized in that** the unsaturated aliphatic compound and the compound containing an H-Si group are used in a molar ratio of from 20:1 to 1:5 in the reaction.

6. Process according to any of Claims 1 to 5, **characterized in that** the Pt(0) complex catalyst used is a platinum(0)-divinyltetramethyldisiloxane complex or platinum(0)-divinyltetramethyldisiloxane of the formula Pt₂{[(CH₂=CH)(CH₃)₂Si]₂O}₃.

7. Process according to any of Claims 1 to 6, **characterized in that** the Pt(0) complex catalyst is used as a solution in an aromatic hydrocarbon, in a ketone or in an alcohol, with the Pt(0) content of the solution being from 0.1 to 10% by weight.

8. Process according to any of Claims 1 to 7, **characterized in that** the reaction is carried out using at least one organic nitrile of the formula V
R⁸-CN (V),
where R⁸ is a linear, branched or cyclic alkyl group having from 1 to 16 carbon atoms.

9. Process according to any of Claims 1 to 8, **characterized in that** butyronitrile is used as organic nitrile.

10. Process according to any of Claims 1 to 9, **characterized in that** the respective organic additive component selected from among dimethylformamide and dimethylacetamide or of the formula (V) and the platinum of the Pt(0) complex catalyst are used in a molar ratio of from 10:1 to 1:10.

11. Process according to any of Claims 1 to 10, **characterized in that** the respective organic additive component selected from among dimethylformamide and dimethylacetamide or of the formula (V) is added to the platinum catalyst solution and this solution is subsequently added to the mixture of the compound containing at least one H-Si group and at least one unsaturated aliphatic compound.

12. Process according to any of Claims 1 to 11, **characterized in that** the molar ratio of the platinum in the catalyst used to the H-Si group of the formula II is from 1:10¹⁰ to 1:10².

13. Process according to any of Claims 1 to 12 **characterized in that** the reaction is carried out at a temperature in the range from 10 to 200°C.

14. Process according to any of Claims 1 to 13 **characterized in that** the reaction is carried out at a pressure in the range from 1 to 50 bar absolute.

15. Process according to any of Claims 1 to 14, **characterized in that** 3-chloro-1-propene is reacted with a chlorosilane of the general formula II in the presence of a Pt(0) complex catalyst and with addition of at least one of the additive components selected from dimethylformamide and dimethylacetamide or of the formula (V), with the catalyst and the additive component being used together in a solvent, the hydrosilylation product being isolated from the reaction mixture and being esterified with an alcohol.

16. Process according to Claim 15, **characterized in that** the alcohol used is methanol, ethanol or 2-methoxyethanol.

## Revendications

1. Procédé pour la fixation par addition d'un composé, qui contient au moins un groupe H-Si, sur un composé aliphatique insaturé de formule générale I
X-(CH₂)ₙ-C(R¹) =CH₂ (I),
dans laquelle X représente un atome d'hydrogène, de chlore ou de brome ou un groupe cyano ou nitrile (-CN), un groupe fluoroalkyle conforme à CₘF₂ₘ₊₁ où m = 1 à 20, un groupe alcoxypolyéther conforme à R¹O-(CH₂-CHR¹-O)_{y}- où y = 0 à 30 ou un groupe 2,3-époxypropyle-1, les groupes R¹ sont identiques ou différents et R¹ représente chaque fois un atome d'hydrogène ou un groupe alkyle en C₁-C₄ linéaire ou ramifié et n est un nombre entier valant de 0 à 3,
par mise en réaction du composé aliphatique insaturé avec le composé contenant un groupe H-Si en présence d'un catalyseur au platine et d'au moins un composant organique supplémentaire,
la réaction étant effectuée en présence
(i) d'un catalyseur complexe de Pt(0), qui est utilisé en solution dans un solvant, et d'au moins un amide organique, choisi parmi le diméthylformamide ou le diméthylacétamide,
ou
(iii) d'un catalyseur complexe de Pt(0), qui est utilisé en solution dans un solvant, et d'au moins un nitrile organique.

2. Procédé selon la revendication 1,
**caractérisé en ce qu'**on utilise comme composé aliphatique insaturé le 3-chloropropène-1 ou le 3-chloro-2-méthylpropène-1.

3. Procédé selon la revendication 1 ou 2, **caractérisé en ce que** pour la réaction on utilise comme composé contenant un groupe H-Si un hydrogénosilane de formule générale II
H_{(4-a-b)}SiRₐY_{b} (II),
dans laquelle les groupes R sont identiques ou différents et R représente un groupe alkyle linéaire, ramifié ou cyclique ayant de 1 à 16 atomes de carbone ou un groupe aryle,
les groupes Y sont identiques ou différents et Y représente un atome de chlore ou de brome ou le groupe méthoxy ou éthoxy et
a est égal à 0 ou 1 ou 2 ou 3 et b est égal à 0 ou 1 ou 2 ou 3, étant entendu que 1 ≤ (a + b) ≤ 3.

4. Procédé selon au moins l'une quelconque des revendications 1 à 3,
**caractérisé en ce qu'**on utilise comme composé contenant un groupe H-Si le trichlorosilane, le méthyldichlorosilane ou le diméthylchlorosilane.

5. Procédé selon au moins l'une quelconque des revendications 1 à 4,
**caractérisé en ce que** pour la réaction on utilise le composé aliphatique insaturé et le composé contenant un groupe H-Si en un rapport molaire de 20 : 1 à 1 : 5.

6. Procédé selon au moins l'une quelconque des revendications 1 à 5,
**caractérisé en ce qu'**on utilise comme catalyseur complexe de Pt(0) un complexe de platine(0)-divinyltétraméthyldisiloxane conforme à la formule Pt₂{[(CH₂=CH)(CH₃)₂Si]₂O}₃.

7. Procédé selon au moins l'une quelconque des revendications 1 à 6,
**caractérisé en ce qu'**on dissout le catalyseur complexe de Pt(0) dans un hydrocarbure aromatique, dans une cétone ou dans un alcool, la teneur en Pt(0) de la solution valant de 0,1 à 10 % en poids.

8. Procédé selon au moins l'une quelconque des revendications 1 à 7,
**caractérisé en ce que** pour la réaction on utilise au moins un nitrile organique de formule générale V
R⁸-CN (V),
dans laquelle R⁸ représente un groupe alkyle linéaire, ramifié ou cyclique ayant de 1 à 16 atomes de carbone.

9. Procédé selon au moins l'une quelconque des revendications 1 à 8,
**caractérisé en ce qu'**on utilise comme nitrile organique le butyronitrile.

10. Procédé selon au moins l'une quelconque des revendications 1 à 9,
**caractérisé en ce qu'**on utilise le composant organique supplémentaire respectif, choisi parmi le diméthylformamide ou le diméthylacétamide ou conforme à la formule (V), et le platine du catalyseur complexe de Pt(0) en un rapport molaire de 10:1 à 1:10.

11. Procédé selon au moins l'une quelconque des revendications 1 à 10,
**caractérisé en ce qu'**on ajoute le composant organique supplémentaire respectif, choisi parmi le diméthylformamide ou le diméthylacétamide ou conforme à la formule (V), à la solution de catalyseur au platine et ensuite on ajoute cette solution au mélange d'au moins un composé contenant un groupe H-Si et d'au moins un composé aliphatique insaturé.

12. Procédé selon au moins l'une quelconque des revendications 1 à 11,
**caractérisé en ce que** le platine du catalyseur utilisé, par rapport au groupe H-Si selon la formule II est en un rapport molaire de 1 : 10¹⁰ à 1 : 10².

13. Procédé selon au moins l'une quelconque des revendications 1 à 12,
**caractérisé en ce qu'**on effectue la réaction à une température dans la plage de 10 à 200 °C.

14. Procédé selon au moins l'une quelconque des revendications 1 à 13,
**caractérisé en ce qu'**on effectue la réaction sous une pression absolue dans la plage de 1 à 50 bars.

15. Procédé selon au moins l'une quelconque des revendications 1 à 14,
**caractérisé en ce qu'**on fait réagir du 3-chloroprène-1 avec un chlorosilane de formule générale II en présence d'un catalyseur complexe de Pt(0) et avec addition d'au moins l'un des composants supplémentaires, choisi parmi le diméthylformamide ou le diméthylacétamide ou conforme à la formule (V), le catalyseur et le composant supplémentaire étant utilisés en étant présents ensemble dans un solvant, on recueille le produit d'hydrosilylation à partir du mélange réactionnel et on l'estérifie avec un alcool.

16. Procédé selon la revendication 15,
**caractérisé en ce qu'**on utilise comme alcool le méthanol, l'éthanol ou le 2-méthoxyéthanol.
